Europäisches Patentamt

European Patent Office

Office européen des brevets

(11) Publication number: **0 323 735 B1**

# EUROPEAN PATENT SPECIFICATION

(45) Date of publication of patent specification: **02.12.92**  (51) Int. Cl.[5]: **B01J 33/00**, C10G 11/05

(21) Application number: **88312171.7**

(22) Date of filing: **22.12.88**

(54) **Catalytic cracking catalysts for metals laden feeds.**

(30) Priority: **28.12.87 US 138002**

(43) Date of publication of application:
**12.07.89 Bulletin 89/28**

(45) Publication of the grant of the patent:
**02.12.92 Bulletin 92/49**

(84) Designated Contracting States:
**BE DE FR GB IT NL**

(56) References cited:
EP-A- 0 179 578      FR-A- 2 376 699
US-A- 3 044 954      US-A- 4 093 561
US-A- 4 378 308      US-A- 4 650 782

(73) Proprietor: **MOBIL OIL CORPORATION**
**150 East 42nd Street**
**New York New York 10017(US)**

(72) Inventor: **Chu, Pochen**
**1173 Ollerton Road**
**West Deptford New Jersey(US)**
Inventor: **Kirker, Garry Wayne**
**18 Old Mill Road**
**Sewell New Jersey 08080(US)**
Inventor: **Huss, Albin, Jr.**
**51 Stirling Way**
**Cadds Ford Pennsylvania 19317(US)**

(74) Representative: **Colmer, Stephen Gary**
**Patent Department c/o Mobil Services Company Limited Mobil Court 3 Clements Inn**
**London WC2A 2EB(GB)**

**Description**

A zeolitic cracking catalyst is surface coated with a solid, refractory material which can interact and trap metal components, nickel, iron, copper, sodium and vanadium, in the feedstocks, that destructively interact with the zeolite and/or adversely affect the cracking catalyst performance. In one embodiment the composition of the coating material is a rare earth-aluminum-phosphorus oxide, which is porous, and thermally and hydrothermally stable.

The use of zeolite-containing cracking catalysts has been described. The invention pertains to improvements in such zeolitic cracking catalyst to accommodate problems which inhere in current refinery trends.

Current worldwide refinery trends indicate a continuing need to process heavier feedstocks. As a result, many refiners are processing feeds containing atmospheric and/or vacuum resid fractions with high metals content. The development of a highly metals resistant cracking catalyst such as herein disclosed would reduce cracking catalyst requirements; permit the processing of heavier feeds including resids and give the refiner greater overall flexibility in unit operating conditions. The problem of metal contaminated feeds is treated in U.S. Patent Nos. 4,158,621 and 4,645,589.

The magnitude of the problem of cracking metals-laden feeds for FCC is known. Indeed, it is evident that activity losses due to vanadium poisoning are due to destructive interaction of vanadium species and the active zeolite. Therefore, an effective trap for vanadium may be expected to significantly increase the life of FCC catalysts when processing heavier feeds. FCC catalyst requirements as high as 0.5-1.0 lbs per barrel of FCC feed are typical when processing resids compared with 0.1-0.2 lb of catalyst per barrel for conventional gas oils. This dramatic increase in catalyst usage is largely due to the higher metals content of the heavier resid feeds. The deleterious effects of metals have been discussed extensively in the literature (U.S. Patents 4,376,696; 4,513,093; 4,515,900) and are also well known to those skilled in the art. Vanadium is known to substantially deactivate cracking catalysts by irreversibly destroying the active zeolite while nickel, iron and copper promote dehydrogenation reactions which result in increased coke and dry gas yields at the expense of the desired liquid products. On the other hand sodium reduces catalyst activity by neutralizing acid sites.

According to the present invention, a catalyst for catalytic cracking is proivided, the catalyst comprising discrete particles comprising a large pore zeolite in a suitable inorganic oxide matrix and a coating on the surface of the particles wherein the surface coating comprises at least one component which is effective to trap metals present in a feed subjected to the catalytic cracking, namely rare earth oxide-aluminum oxide-aluminum phosphate.

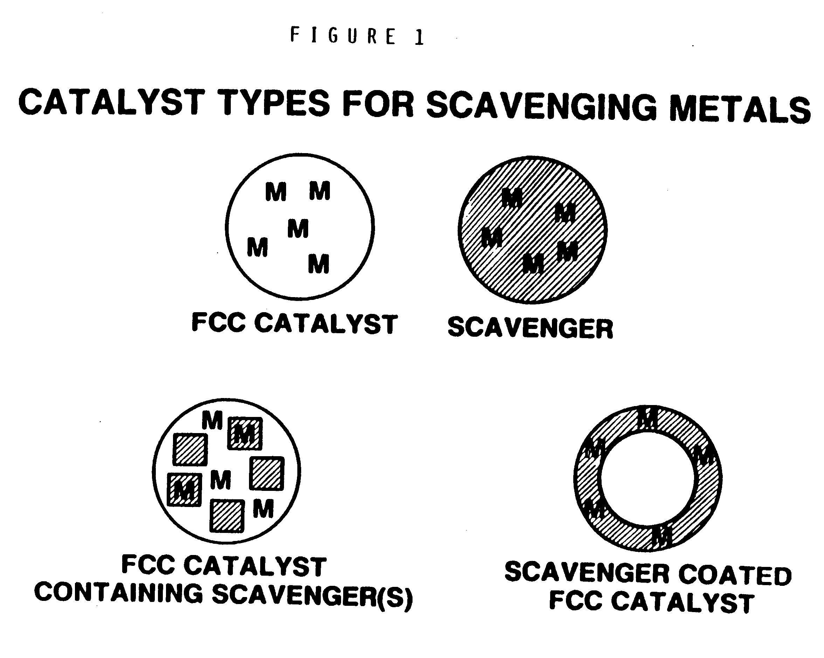

The concept disclosed is that of preparing novel cracking catalysts by surface coating conventional cracking catalysts with passivators that act as metals traps. This concept is in contrast to the other types of metals scavenging catalysts, namely the separate particle additive which contains the metals traps and active zeolitic components in separate particles and the composite catalyst which contains the metals traps throughout the catalyst particle as illustrated in Figure 1.

A cracking catalyst resistant to metals poisoning, especially by nickel and vanadium, is obtained when a protective coating that acts as a trap for metals is applied to the surface of the catalyst prior to exposure to metals-containing feedstocks. This protective coating, which can be strongly bound to the catalyst and acts as a passivator of the metals, can remain protective for the useful life of the catalyst.

Alternatively, the protective coating which serves the same metals removal and passivation function, can be weakly bound so as to gradually flake off the catalyst, and in so doing, the spent coating material serves as a sacrificial metals trap which continually exposes new sites as the coating attrits off. This could be a very effective method of removing nickel from an FCC catalyst and, as a result, maintaining a low overall metals level in the FCC unit inventory.

Either fluid or moving bed cracking catalysts can be rendered resistant to metals poisoning by the method of this invention.

Figure 1 is an illustration of various embodiments of incorporation of scavengers into catalysts.

Figure 2 shows a comparison of the scanning electron micrographs of the uncoated base catalyst of Example 1 and the lanthana-alumina-aluminum phosphate (LAAP) coated catalyst of Example 6.

Figures 3 and 4 compare the uncoated base catalyst of Example 2 with the magnesia-alumina-aluminum phosphate (MAAP) and SnO$_2$ coated catalysts of Examples 8 and 9, respectively.

Catalytic cracking units which are amenable to the process of this invention operate within the temperature range of 400°F (205°C) to 1600°F (871°C), and under reduced, atmospheric or superatmospheric pressure. The catalytic cracking process can be either fixed bed, moving bed or fluidized bed, and the hydrocarbon charge stock flow may be either concurrent or countercurrent to the conventional catalyst flow. The process of this invention is particularly applicable to the fluid catalytic cracking (FCC) process.

The FCC process is well known to the art and detailed description thereof is not believed necessary. Although the design and construction of individual plants vary, the essential elements of an FCC unit are illustrated in U.S. Patent 4,368,114.

Briefly, in the FCC process the catalyst is in the form of microspheres, which acts as a fluid when suspended in oil vapor or gas. The hydrocarbons contact the fluidized catalyst and are catalytically cracked to lighter products. The catalyst is deactivated by coke deposition, necessitating regeneration of coked catalyst in a regenerator.

After cracking, the resulting product gas can be compressed and the resulting products may suitably be separated from the remaining components by conventional means, such as adsorption, distillation, etc.

Suitable large pore zeolite catalysts comprise a crystalline zeolite (active component) in a suitable matrix. Representative crystalline zeolite active component constituents of the cracking catalysts include zeolite X (U.S. Patent 2,882,244), zeolite Y (U.S. Patent 3,130,007), synthetic mordenite and dealuminized synthetic mordenite, merely to name a few, as well as naturally occurring zeolites, including chabazite, faujasite, mordenite, and the like. Preferred crystalline zeolites include natural faujasite and the synthetic faujasite zeolites X and Y, with particular preference being accorded zeolite Y. For the purposes of the present invention, zeolite Y includes zeolite Y in its as-synthesized form as well as its variant forms including dealuminated zeolite Y, e.g., ultrastable Y (USY) (described in U.S. Patent No. 3,293,192) and LZ-210 (as described in U.S. Patent No. 4,503,023).

The large pore crystalline zeolites are ordinarily ion exchanged either separately or in the final catalyst with a desired cation to replace alkali metal present in the zeolite as found naturally or as synthetically prepared. The exchange treatment is such as to reduce the alkali metal content of the final catalyst to less than 1.5 wt % and preferably less than 0.5 wt %.

The purpose of ion exchange is to substantially remove alkali metal cations which are known to be deleterious to cracking, as well as to introduce particularly desired catalytic activity by means of the various cations used in the exchange medium. For the cracking operation described herein, preferred cations are hydrogen, ammonium, rare earth and mixtures thereof, with particular preference being accorded rare earth. Such rare earth elements include Sm, Nd, Pr, Ce and La. Ion exchange is suitably accomplished by conventional contact of the zeolite with a suitable salt solution of the desired cation such as, for example, the sulfate, chloride or nitrate.

The large pore crystalline zeolites of the cracking catalyst is incorporated in a suitable inorganic oxide matrix because this catalyst form is generally characterized by a high resistance to attrition, high activity and exceptional steam stability. The inorganic oxide which serves as the matrix in which the above zeolite is distributed includes silica gel or a cogel of silica and suitable metal oxide. Representative cogels include silica-alumina, silica-magnesia, silica-zirconia, silica-thoria, silica-beryllia, silica-titania, as well as ternary combinations such as silica-alumina-magnesia, silica-alumina-zirconia and silica-magnesia-zirconia. Preferred cogels include silica-alumina, silica-zirconia or silica-alumina-zirconia. The above gels and cogels will generally comprise a major proportion of silica and a minor proportion of the other aforementioned oxide or oxides. Thus, the silica content of the siliceous gel or cogel matrix will generally fall within the range of 55 to 100 wt %, preferably 60 to 95 wt %, and the other metal oxide or oxides will generally be within the range of 0 to 45 wt % and preferable 5 to 40 wt %. In addition to the above, the matrix may also comprise natural or synthetic clays, such as kaoline type clays, montmorillonite, bentonite or halloysite. These clays may be used either alone or in combination with silica or any of the above specified cogels in matrix formulation. Such clays can be used in the raw state as originally mined or initially subjected to calcination, acid treatment or chemical modification. In addition to the foregoing materials, they can be composited with a porous matrix material such as a silica-alumina, silica-magnesia, silica-zirconia, silica-thoria, silica-beryllia, silica-titania, as well as ternary compositions such as silica-alumina- thoria, silica-alumina-zirconia, silica-alumina-magnesia and silica-alumina-zirconia. The matrix can be in the form of a cogel.

The content of large pore zeolite in the bound catalyst is generally between 5 and 60 wt %. Ion exchange of the large pore zeolite to replace its initial alkali metal content can be accomplished either prior to or subsequent to incorporation of the porous crystalline silicate into the matrix.

The above compositions may be readily processed so as to provide fluid cracking catalyst by spray drying the composite to form microspheroidal particles of suitable size. Alternatively, the composition may be adjusted to suitable concentration and temperature to form bead type catalyst particles suitable for use in moving bed type cracking systems. Spheres or microspheres containing large pore zeolites have been used in catalytic cracking. The particle size of these spheres may be sufficient to pass through a 2 mesh (8 mm) (Tyler) screen and be retain on a 400 mesh (37 ) (Tyler) screen. The spheres may be in the form of a

3

powder, a granule or a molded product (such as an extrudate). As used herein the words spheres and microspheres include beads. The catalyst may also be used in various other forms such as those obtained by tabletting, balling or extruding.

Hydrocarbon charge stocks undergoing cracking in accordance with this invention comprise hydrocarbons generally and, in particular, petroleum fractions having an initial boiling range of at least 400°F (205°C), a 50% point of at least 500°F (260°C), and an end point of at least 600°F (315°C). Such hydrocarbon fractions include gas oils, residual oils, cycle stocks, whole top crudes and heavy hydrocarbon fractions derived by the destructive hydrogenation of coal, tar, pitches, asphalts and the like. As will be recognized, the distillation of higher boiling petroleum fractions above 750°F (400°C) must be carried out under vacuum in order to avoid thermal cracking. The boiling temperatures utilized herein are expressed, for convenience, in terms of the boiling point corrected to atmospheric pressure.

In accordance with one embodiment of the invention the catalyst microspheres are provided with a solid, porous, coating comprising rare earth oxide-aluminum oxide-aluminum phosphate, such as lanthana-alumina-aluminum phosphate, or mixed rare earth oxide-aluminum oxide-aluminum phosphate. In that embodiment of the invention that coating is a X-ray amorphous solid, porous refractory coating. The rare earth metals include those with atomic number of 57 through 71, e.g, La, Ce, Pr, Nd, Sm, Fu, Gd, Tb, Dy, Ho, Er, Tm, Yb, Lu and mixtures thereof such as lanthanum and cerium. The coating composition is synthesized by neutralizing a solution of rare earth metal or metals and aluminum in phosphoric acid with a basic solution. The presence of organic base, e.g., tetraalkylammonium or alkylamine, compounds in the synthesis reaction mixture results in a controlled modification of the pore size distribution of the final product composition.

One such coating is applied to the microspheres and then dried. In a preferred embodiment, application is by spraying as described in the Examples. The coating is dried at temperatures above 100°C.

The coating is prepared forming a first solution containing at least one source of aluminum (+3 valence), a source of rare earth metal (+3 valence) and phosphoric acid and providing a second solution comprising a basic solution; and the mixing the first and second solutions together with agitation, e.g., stirring, while maintaining the mixture pH at from 8 to 12, preferably from 8.5 to 9.5.

Examples of suitable sources of aluminum for the first solution include aluminum nitrate and aluminum sulfate. The first solution will also comprise one or more sources of rare earth metal ($RE^{+3}$), including as suitable examples, lanthanum nitrate, lanthanum chloride and mixed rare earths such as rare earth chlorides. Commercial sources of rare earths often comprise mixtures of salts of such metals, e.g., the chlorides. These aluminum and rare earth metal sources are dissolved in a suitable polar solvent medium, such as water. The first solution will also comprise phosphoric acid ($H_3PO_4$), e.g., in solution with water. The composition of this first solution will be comprised as follows:

| COMPONENT | WT % OF SOLUTION |
|---|---|
| Aluminum | 0.1 to 10 |
| Rare Earth metal | 0.1 to 10 |
| Phosphorus | 0.2 to 5 |

The second solution will comprise a basic solution (pH of from 10 to 14). Suitable components of this second solution include inorganic and/or organic bases such as, for example, ammonium hydroxide, ammonia, tetraalkylammonium hydroxide and alkylamine, alkyl being methyl-, ethyl-, propyl-, butyl- or a mixture thereof, e.g., tetramethylammonium and n-propylamine.

It is believed that the exact composition of the second solution, i.e., the type and concentration of organic or inorganic base, affects the pore size distribution in the final synthesis product. For instance, the use of tetramethylammonium hydroxide in the second solution, as exemplified hereinafter, results in an increased percentage of pores in the 10-20 nm (100-200 Angstrom) diameter range when compared to use of a basic second solution having no tetramethylammonium.

In general, the calcined amorphous refractory composition hereof will have a surface area of from $50m^2/g$ to $500m^2/g$, preferably from $100m^2/g$ to $250m^2/g$; and a pore volume of from $0.3cm^3/g$ to $1.5cm^3/g$, preferably from $0.5cm^3/g$ to $1cm^3/g$.

The pore size distribution of the present material following calcination will include 5 vol. % to 20 vol. % within the pore size diameter range of 5-10 nm (50 to 100 Angstroms), 10 vol. % to 35 vol. % within the pore size diameter range of 10-15 nm (100 to 150 Angstroms), 15 vol. % to 50 vol. % within the pore size diameter range of 15-20 nm (150 to 200 Angstroms) and 10 vol. % to 50 vol. % within the pore size diameter range of 20-40 nm (200 to 400 Angstroms).

A further distinguishing feature of the present refractory composition is its ability to sorb vapor molecules of water, cyclohexane and n-hexane in an Equilibrium Sorption Test, hereinafter detailed, following calcination at 538°C for 6 hours, of greater than 10 wt% water, greater than 6 wt% cyclohexane and greater than 5 wt% n-hexane.

The relative proportions of components of the present amorphous refractory composition in terms of rare earth oxide:aluminum oxide:aluminum phosphate (weight relationships) will be from 10:20:70 to 90:5:5, especially from 25:20:55 to 30:25:45.

The coating composition can be dehydrated by heating to a temperature in the range of 200°C to 595°C in an inert atmosphere, such as air, nitrogen, etc., and at atmospheric, subatmospheric or superatmospheric pressures for between 15 minutes and 48 hours. Dehydration can also be performed at room temperature merely by placing the material in a vacuum, but a longer time is required to obtain a sufficient amount of dehydration.

The refractory coating may be beneficially thermally treated prior to use in a chemical conversion process by heating at a temperature of at least 370°C for at least 1 minute and generally not longer than 20 hours. While subatmospheric pressure can be employed for the thermal treatment, use of atmospheric pressure is desired for reasons of convenience. The thermal treatment can be performed at a temperature up to 925°C.

Calcination of the rare earth oxide-aluminum oxide-aluminum phosphate material used to coat the catalysts in accordance with the invention produces a product characterized by a surface area of from 50 $m^2/g$ to 500 $m^2/g$, a pore volume of from 0.3 $cm^3/g$ to 1.5 $cm^3/g$, and Equilibrium Sorption capacities of greater than 10 wt% for the water vapor, greater than 6 wt% for cyclohexane vapor and greater than 5 wt% for n-hexane vapor.

EXAMPLES

Example 1

The catalyst of Example 1 was Super D, a commercial REY catalyst manufactured by the Davison Division of W. R. Grace. This catalyst was chemically analyzed and found to contain (100% solids basis) 63.7 wt% $SiO_2$, 32.2 wt. % $Al_2O_3$, 3.0 wt% $RE_2O_3$ and 0.57 wt% Na. X-ray analysis indicates an REY content of 14%. The surface area of the as-received catalyst was 151 $m^2/g$.

Example 2

The catalyst of this example was laboratory prepared and contains 20 wt% calcined REY in a $SiO_2$-$Al_2O_3$-clay (60.45/4.55/35 wt/wt/wt) matrix.

As detailed in Examples 3-5 below, separate gels of Lanthana-Alumina-Aluminum Phosphate (LAAP), Magnesia-Alumina-Aluminum Phosphate (MAAP) and Tin (IV) Oxide ($SnO_2$) were prepared for surface coating of FCC catalysts. These materials were selected because they contain one or more of the vanadium passivators La, Mg, P and Sn. While subsequent work showed poor vanadium resistance for the MAAP and $SnO_2$ coated catalysts, the examples are nonetheless included to demonstrate the surface coating concept. These results indicate that the MAAP and $SnO_2$ compositions were not effective as metals traps. In contrast, the LAAP coating does significantly improve the vanadium tolerance of the base catalyst as detailed herein.

Example 3: Lanthana-Alumina-Aluminum Phosphate (LAAP) Gel Preparation

Reagent Grade $Al(NO_3)_3.9H_2O$ (26 parts) was dissolved into 68 parts of distilled water. Separately, La-$(NO_3)_3.6H_2O$ (6 parts) was dissolved in 68 parts of distilled water. These solutions were combined and $H_3PO_4$ (4 parts) was added and the resulting clear solution was well stirred. A separate solution consisting of 97 parts of 25 wt% TMAOH was placed in a dropping funnel. These two solutions were next simultaneously added to a beaker which contained 68 parts of distilled water and the contents were continually stirred during the mixing period. The relative addition rates of the two solutions were adjusted to maintain the pH of the suspension at 9.0. The final pH of the suspension containing the white precipitate was 9.11. The suspension was filtered, washed with 1 liter of distilled water and held as a wetcake. The gel (at 6.9 wt% solids) was homogenized in an Oster blender for 3 minutes.

Example 4: Magnesia-Alumina-Aluminum Phosphate (MAAP) Gel Preparation

Reagent grade Al(NO$_3$)$_3$.9H$_2$O (12.5 parts) was dissolved in 33.3 parts of distilled water. Separately, Mg(NO$_3$)$_2$.6H$_2$O (0.9 parts) was dissolved in 33.3 parts of distilled water. These solutions were combined and 2.0 parts of (85.8 wt%) H$_3$PO$_4$ was added with stirring. In a separate vessel, n-propylamine (9.9 parts) was added to 8.0 parts of distilled water and thoroughly mixed. These two solutions were slowly added to a stirred solution of 33.3 parts of distilled water at rates which maintained a constant pH of 9.0. After all of the solution was added, a final pH of 9.0 was recorded. The gel was 2.4 wt% solids.

Example 5: Tin (IV) Oxide Gel Preparation

Reagent grade SnCl$_4$.5H$_2$O (9.2 parts) was dissolved in 52.5 parts of distilled water. Next, slowly and with vigorous stirring, TMAOH (38.3 parts) was added to reach a pH of 5.0. The gel was stirred for 15 minutes, then filtered, washed with 3.3 L of distilled water and pulled to a wet filter cake. The wet cake was then suspended and homogenized in water. The gel was determined to be 3.0 wt% solids at 538°C (1000°F).

Examples 6-9: Spray Coating of Fluid Catalysts

Example 6

Using a Yamato Model GA-21 Fluidized Bed Spray Granulator Dryer, the gel of Example 3 was sprayed into a heated (200°C) fluidized bed of the catalyst of Example 1 so as to apply a surface coating of LAAP on the fluid microspheres. Chemical analysis of a calcined portion of this material indicate the following composition: 55.4 wt% SiO$_2$, 3.75 wt% RE$_2$O$_3$ (2.5 wt% as La$_2$O$_3$) and 0.29 wt% P at an ash content of 96. 1 wt%. The calculated LAAP content is approximately 2.5 wt% based on P analysis.

Example 7

Using the same procedure as described in Example 6 above, the MAAP gel of Example 4 was sprayed onto the catalyst of Example 2 so as to apply a surface coating of MAAP. Chemical analysis of a calcined portion of this material indicate the following composition: 66.3 wt% SiO$_2$, 0.45 wt% P and 0.14 wt% Mg at an ash content of 95.2 wt%. The calculated MAAP content is 3.7 wt% based on P analysis.

Example 8

The catalyst of this example was prepared identically to that of Example 7 except that the fluidized bed spray dryer conditions were altered. Chemical analysis of a calcined portion of this material indicate the following composition: 69.5 wt% SiO$_2$, 0.44 wt% P and 0.115 wt% Mg at an ash content of 94.9 wt%. The calculated MAAP content is 3.6 wt% based on P analysis.

Example 9

Using the same procedure as described in Example 6 above, the SnO$_2$ gel of Example 5 was sprayed onto the fluid catalyst of Example 2 so as to apply a surface coating of SnO$_2$. Chemical analysis of a calcined portion of this material indicate the following composition: 71.0 wt% SiO$_2$ and 2.6 wt% Sn at an ash content of 96.4 wt%. The calculated SnO$_2$ content is 3.4 wt% based on the Sn analysis.

Characterization of Examples 1-9 Catalysts

Several types of analyses were performed which demonstrate that the method employed in Examples 6-9 resulted in a surface coating of the fluid catalyst microspheres with the desired gels. This method did not result in either appreciable surface penetration of the fluid catalysts or formation of individual fluid microspheres of the LAAP, MAAP or SnO$_2$ gels. The evidence which is detailed below is based on Scanning Electron Microscopy (SEM), Surface X-ray Photoelectron Spectroscopy (XPS) and chemical analysis of fines attrited from the coated catalysts.

Scanning Electron Microscopy

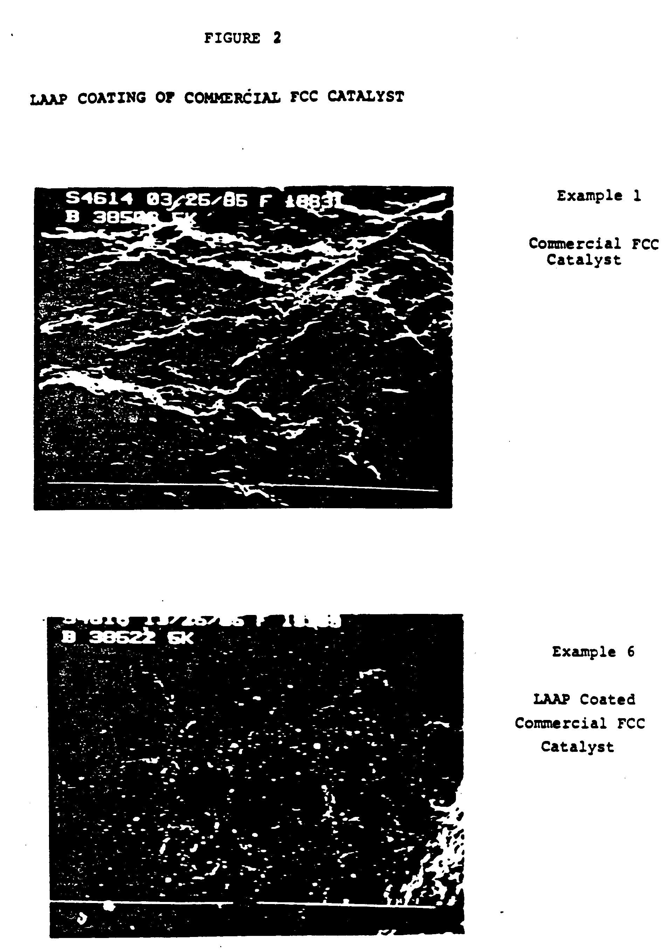

A comparison of the scanning electron micrographs of the uncoated base catalyst of Example 1 and the LAAP coated catalyst of Example 6 is shown in Figure 2.

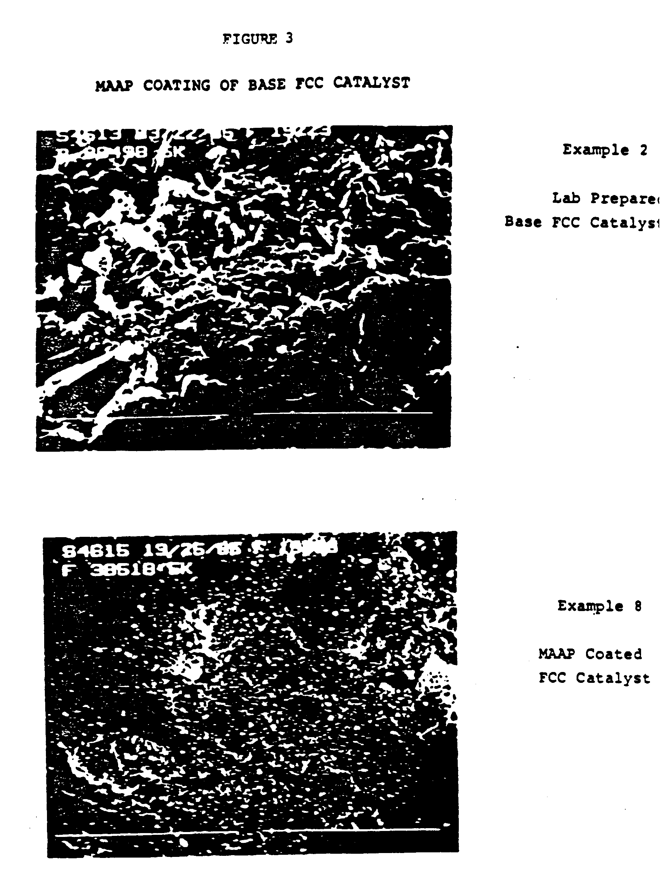

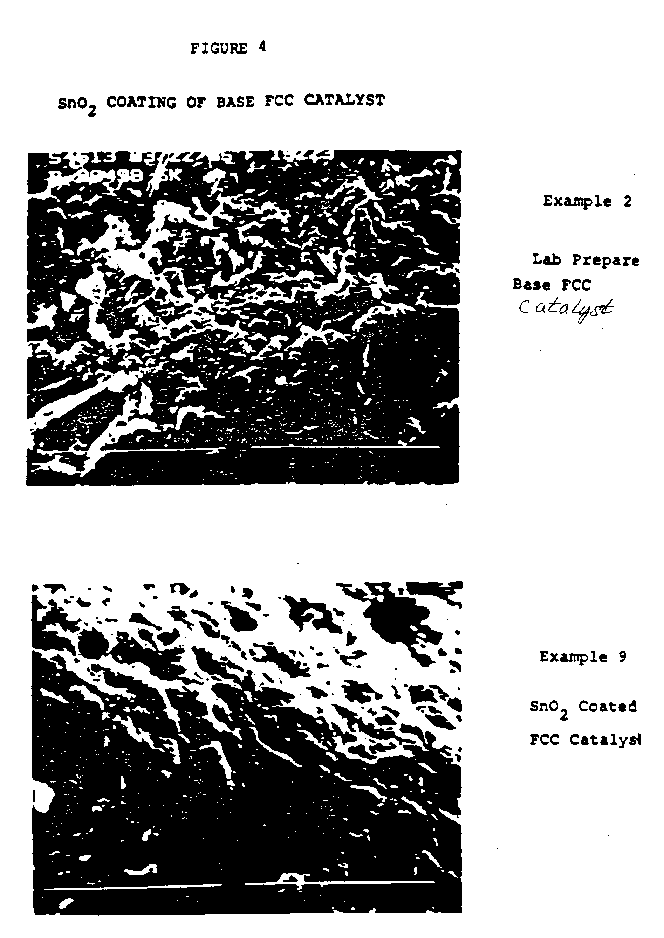

Figures 3 and 4 compare the uncoated base catalyst of Example 2 with the MAAP and $SnO_2$ coated catalysts of Examples 8 and 9, respectively. In each case, a substantial change in the surface morphology of the fluid microspheres is observed due to the spray coating procedure.

## Surface X-ray Photoelectron Spectroscopy

XPS analyses of the Super D base catalyst of Example 1 indicated a surface La content of 2.2 wt% as compared with 1.6 wt% bulk. For the LAAP coated catalyst of Example 6, the surface La content increased to 18.8 wt% while the bulk value increased to only 2.6 wt%. Si is still observed on the LAAP coated particle surface, indicating that while the LAAP is predominately on the surface it does not completely cover all the available surface.

## Attrition Analysis of Coated Catalysts

The catalysts of Examples 6-9 were each evaluated in our standard FCC catalyst attrition test using the following procedure: 7.0 $cm^3$ of calcined (1000°F, 2 hrs) catalyst is contacted in a 2,54 cm (1 inch) i.d., "U" tube with an air jet formed by passing humidified (60%) air through a 0,177 cm (0.07 inch) nozzle at 21 liters/min for 1 hour. The fines (0-20 $\mu$m) generated during attrition are removed as formed in the Roller apparatus and collected in a paper thimble. The particles which are approximately 20$\mu$m and larger are retained in the "U" tube. The attrition index (AI) is defined as the increase in the fines fraction (0-20 $\mu$m) caused by the attrition process.

Due to the nature of the surface coating, one might expect the LAAP, MAAP and $SnO_2$ coatings to be relatively weakly bound to the fluid particles compared with the strength of the base FCC catalyst microspheres. This would result in preferential attriting of the surface coating and a resulting concentration of LAAP, MAAP or $SnO_2$ in the thimble fines product. This is exactly what was observed as shown in Table 1.

TABLE 1

| Attrition of Surface Coated FCC Catalysts | | | | |
|---|---|---|---|---|
| Example Number<br>Passivator Coating<br>Percent Coating | 6<br>LAAP<br>2.5 | 7<br>MAAP<br>3.7 | 8<br>MAAP<br>3.6 | 9<br>SnO$_2$<br>3.4 |
| Thimble Fines (Attrited Product) | | | | |
| Percent of Catalyst Charged<br>Percent Passivator Coating | 5.3<br>42 | 10.1<br>26 | 13.6<br>21 | 9.7<br>22 |
| "U" Tube Product | | | | |
| Percent Passivator Coating Remaining<br>Fraction of Initial Coating Retained | 1.3<br>52 | 1.0<br>28 | 2.0<br>54 | 1.0<br>25 |

The foregoing results in Table 1 illustrate the rather weak bonding of the surface coating which flakes off the catalyst during usage. In so doing, the spent surface coating serves as a sacrificial metals trap. As it flakes off it both removes trapped metals from the cracking unit and exposes new passivation and/or catalytic sites.

## Example 10

A portion of the Super D base catalyst described in Example 1 was steamed to 788°C (1450°F) for 10 hours in a 45% steam/55% air, 100 kPa (0 psig) atmosphere. The resulting catalyst had a surface area of 94 $m^2$/g and was analyzed by X-ray to contain 11.3% REY with a corresponding unit cell lattice parameter of 2,456 nm (24.56 Å).

## Example 11

A portion of the LAAP coated Super D catalyst described in Example 6 was steamed at the conditions specified in Example 10. The resulting catalyst had a surface area of 101 $m^2$/g and was analyzed by X-ray diffraction to contain 12.3% REY with a corresponding unit cell lattice parameter of 2,456 nm (24.56 Å).

## Example 12

A portion of the Super D base catalyst of Example 1 was blended with an amount of $V_2O_5$ powder such that the overall vanadium content was 0.5 wt% in the mixture. This mixture was then steamed at the conditions as specified in Example 10. The resulting catalyst contained only 1.9 wt% REY based on X-ray diffraction. Chemical analyses indicates a vanadium content of 0.52 wt%.

## Example 13

A portion of the LAAP coated Super D catalyst of Example 3 was blended with an amount of $V_2O_5$ powder such that the overall vanadium content was 0.50 wt% in the mixture. This mixture was then steamed at the conditions as specified in Example 10. The resulting catalyst contained 2.7% REY based on X-ray diffraction. Chemical analysis indicates a vanadium content of 0.53 wt%.

## Evaluation of Base and LAAP Coated Catalysts

To demonstrate the effect of the LAAP coating on the vanadium tolerance of the base FCC catalyst, the catalysts of Examples 10-13 were each catalytically evaluated in a fixed-fluidized bed unit at 514°C (960°F) temperature, 3.0 cat/oil (15 WHSV) and 1.0 minutes on-stream using Joliet Sour Heavy Gas Oil (JSHGO) as feed. The JSHGO chargestock properties are given in Table 2. The catalytic results, summarized in Table 3, clearly demonstrate a greater vanadium tolerance for the LAAP coated catalyst. Following the addition of 5000 ppm V (as $V_2O_5$) and subsequent hydrothermal treatment, the LAAP-coated catalyst of Example 13 gave a 37.0 vol. % conversion of JSHGO compared to only 30.8 vol % conversion for the uncoated base catalyst of Example 12.

TABLE 2

| Chargestock | Joliet Sour Heavy Gas Oil (JSHGO) |
|---|---|
| Gravity, API | 24.3 |
| Aniline Pt., °C (°F.) | 77 (171) |
| Hydrogen, wt.% | 12.3 |
| Sulfur, wt.% | 1.87 |
| Nitrogen, wt.% | 0.10 |
| Basic Nitrogen, ppm | 327 |
| Conradson Carbon, wt% | 0.28 |
| Kinematic Viscosity at 99°C (210°F) | 3.6 |
| Bromine No. | 4.2 |
| R.I. at 21°C (70°F.) | 1.5080 |
| Molecular Weight | 358 |
| Pour Point, °C (°F.) | 29 (85) |
| Paraffins, wt.% | 23.5 |
| Naphthenes, wt.% | 32.0 |
| Aromatics, wt.% | 44.5 |
| Aromatic Carbon, wt.% | 18.9 |
| Ni, ppm | 0.3 |
| V, ppm | 0.6 |

TABLE 3

| Effect of LAAP Coating On Vanadium Tolerance of Commercial FCC Catalyst | | | | |
|---|---|---|---|---|
| | Commercial REY Catalyst Super D | LAAP Coated REY Catalyst Super D | Commercial REY Catalyst Super D | LAAP Coated REY Catalyst Super D |
| Example Number | 10 | 11 | 12 | 13 |
| V Content, ppm | 0 | 0 | 5000 | 5000 |
| Conversion, % vol. | 70.3 | 71.6 | 30.8 | 37.0 |
| Product Yields: | | | | |
| $C_5$ + Gasoline, % vol | 55.6 | 55.6 | 25.1 | 29.5 |
| Total $C_4$'s, % vol | 15.4 | 14.8 | 4.8 | 6.0 |
| Dry Gas, % wt | 7.8 | 8.6 | 3.5 | 4.4 |
| Coke, % wt | 4.5 | 5.5 | 3.0 | 3.1 |
| $H_2$, % wt | 0.07 | 0.08 | 0.25 | 0.30 |
| LFO, % wt | 25.0 | 24.9 | 39.6 | 38.7 |
| HFO, % wt | 7.5 | 6.2 | 30.1 | 25.4 |
| G + D, % wt | 70.5 | 70.5 | 60.4 | 63.3 |
| n-$C_4$, % vol | 1.8 | 1.6 | 0.4 | 0.5 |
| i-$C_4$, % vol | 7.4 | 7.6 | 1.5 | 2.0 |
| $C_4$ =, % vol | 6.1 | 5.7 | 3.0 | 3.5 |
| $C_3$, % vol | 2.5 | 2.9 | 0.7 | 0.7 |
| $C_3$ =, % vol | 6.9 | 7.3 | 2.4 | 3.2 |

Attrition Analyses of Vanadium Containing Base and LAAP Coated Catalysts

In order to demonstrate that the LAAP coating trapped a significant portion of the vanadium, the vanadium containing LAAP coated catalyst of Example 13 and the base catalyst of Example 12 were each evaluated in our standard FCC catalyst attrition test as previously described. Following the attrition test, both the fines generated during the procedure and the remaining unattrited product were chemically analyzed. The results, summarized in Table 4, clearly show that the vanadium was concentrated in the LAAP coating which attrited off the base catalyst particle. The fines generated from the LAAP coated catalyst contained 2.0 wt% vanadium compared with only 0.6 wt% vanadium for the fines from the uncoated base catalyst. Assuming that the non-LAAP portion of the fines generated from the LAAP coated catalyst also contains 0.6 wt% vanadium, the vanadium content of the LAAP fines is approximately 5.6 wt%. These data suggest that if the LAAP coating were increased to around 10 wt% that the majority of the vanadium could be trapped on the catalyst surface.

TABLE 4

| Attrition Analyses of Vanadium Containing Base and LAAP Coated FCC Catalysts | | |
|---|---|---|
| Example Number | 12 | 13 |
| Passivator Coating | None | LAAP |
| Percent Coating | -- | 2.8 |
| Thimble Fines (Attrited Product) | | |
| Percent of Catalyst Charged | 3.5 | 5.4 |
| Percent Passivator Coating | -- | 28 |
| Wt Percent Vanadium | 0.6 | 2.0 |
| "U" Tube Product | | |
| Percent Passivator Coating | -- | 1.4 |
| Percent of Initial Coating Retained | -- | 50 |
| Wt Percent Vanadium | 0.44 | 0.36 |

**Claims**

1. A cracking catalyst in the form of discrete particles comprising a large pore zeolite in an inorganic oxide matrix characterized in that said particles bear a passivating porous coating comprising rare earth oxide-aluminum oxide-aluminum phosphate.

2. A catalyst according to claim 1 wherein the coating comprises rare earth oxide, aluminum oxide and aluminum phosphate in a weight ration of 10:20:70 to 90:5:5.

3. A catalyst according to claim 1 or claim 2 wherein the rare earth is one or more metals having an atomic number of 57 to 71.

4. A catalyst according to any preceding claim wherein the rare earth is lanthanum.

5. A catalyst according to any preceding claim wherein the large pore zeolite is zeolite Y.

6. A catalyst according to any preceding claim which is an FCC catalyst.

7. A catalyst according to any preceding claim wherein the coating material is prepared by neutralising a solution of rare earth metal and aluminum in phosphoric acid with a solution of a base.

8. A catalyst according to claim 7 wherein the base is organic.

9. A catalyst according to any preceding claim wherein said coating is applied to said particles by spraying.

10. A catalyst according to any preceding claim in which the coating material has a surface area of 50 to 500 $m^2$/g and a pore volume of 0.3 to 1.5 $cm^3$/g.

11. A process for cracking a heavy hydrocarbon feedstock containing at least one metal selected from vanadium and nickel, comprising contacting the feedstock under catalytic cracking conditions with a catalyst in the form of discrete particles comprising a large pore zeolite in an inorganic oxide matrix characterized in that said particles bear a passivating porous coating comprising rare earth-oxide-aluminum oxide-aluminum phosphate.

12. A process according to claim 11 wherein the surface coating traps feed components containing the elements vanadium, copper, nickel, iron and/or sodium.

13. A process according to claim 11 or 12 wherein the coating comprises rare earth oxide, aluminum oxide and aluminum phosphate in a weight ratio of 10:20:70 or 90:5:5.

14. A process according to any of claims 11 to 13 wherein the catalytic cracking is fluid catalytic cracking or moving bed catalytic cracking.

15. A process according to any of claims 11 to 14 wherein the feedstock has an IBP of at least 205°C, a mid-point of at least 260°C and an EP of at least 315°C.

**Patentansprüche**

1. Crackkatalysator in Form einzelner Partikel, die einen großporigen Zeolith in einer Matrix eines anorganischen Oxids umfassen, dadurch gekennzeichnet, daß diese Partikel einen porösen passivierenden Überzug tragen, der ein Oxid der Seltenen Erden-Aluminiumoxid-Aluminiumphosphat umfaßt.

2. Katalysator nach Anspruch 1, worin dieser Überzug ein Oxid der seltenen Erden, Aluminiumoxid und Aluminiumphosphat in einem Gewichtsverhältnis von 10:20:70 bis 90:5:5 umfaßt.

3. Katalysator nach Anspruch 1 oder 2, worin die Seltenen Erden ein oder mehrere Metalle mit der Atomzahl von 57 bis 71 sind.

4. Katalysator nach einem der vorstehenden Ansprüche, worin die Seltenen Erden Lanthan sind.

5. Katalysator nach einem der vorstehenden Ansprüche, worin der großporige Zeolith Zeolith Y ist.

6. Katalysator nach einem der vorstehenden Ansprüche, der ein Wirbelschicht-Crackkatalysator ist.

7. Katalysator nach einem der vorstehenden Ansprüche, worin das Überzugsmaterial hergestellt wird, indem eine Lösung eines Metalls der Seltenen Erden und Aluminium in Phosphorsäure mit einer Lösung einer Base neutralisiert wird.

8. Katalysator nach Anspruch 7, worin die Base eine organische Base ist.

9. Katalysator nach einem der vorstehenden Ansprüche, worin der Überzug durch Sprühen auf die Partikel aufgebracht wird.

10. Katalysator nach einem der vorstehenden Ansprüche, worin das Überzugsmaterial eine spezifische Oberfläche von 50 bis 500 cm$^2$/g und ein Porenvolumen von 0,3 bis 1,5 cm$^3$/g aufweist.

11. Verfahren zum Cracken eines Ausgangsmaterial aus schweren Kohlenwasserstoffen, das zumindest ein Metall enthält, das aus Vanadium und Nickel ausgewählt ist, welches den Kontakt dieses Ausgangsmaterials bei katalytischen Crackbedingungen mit einem Katalysator in Form einzelner Partikel umfaßt, die einen großporigen Zeolith in einer Matrix eines anorganischen Oxids umfassen, dadurch gekennzeichnet, daß diese Partikel einen porösen passivierenden Überzug tragen, der ein Oxid der Seltenen Erden-Aluminiumoxid-Aluminiumphosphat umfaßt.

12. Verfahren nach Anspruch 11, worin der Oberflächenüberzug Beschickungskomponenten auffängt, die die Elemente Vanadium, Kupfer, Nickel, Eisen und/oder Natrium enthalten.

13. Verfahren nach Anspruch 11 oder 12, worin der Überzug das Oxid der Seltenen Erden, Aluminiumoxid und Aluminiumphosphat in einem Gewichtsverhältnis von 10:20:70 oder 90:5:5 umfaßt.

14. Verfahren nach einem der Ansprüche 11 bis 13, worin das katalytische Cracken ein katalytisches Wirbelschichtcracken oder ein katalytisches Bewegtbettcracken ist.

15. Verfahren nach einem der Ansprüche 11 bis 14, worin das Ausgangsmaterial einen Anfangssiedepunkt von mindestens 205°C, einen mittleren Punkt von mindestens 260°C und einen Endpunkt von mindestens 315°C aufweist.

**Revendications**

1. Un catalyseur de craquage sous la forme de particules discrètes comprenant une zéolite à larges pores dans une matrice en oxyde inorganique, caractérisé en ce que ces particules sont recouvertes d'un revêtement poreux de passivation comprenant un mélange oxyde de terres rares/oxyde d'aluminium/phosphate d'aluminium.

2. Un catalyseur selon la revendication 1, caractérisé en ce que le revêtement comprend oxyde de terres rares, oxyde d'aluminium et phosphate d'aluminium dans un rapport pondéral de 10/20/70 à 90/5/5.

3. Un catalyseur selon la revendication 1 ou 2, caractérisé en ce que la terre rare consiste en un ou plusieurs métaux dont le numéro atomique est compris entre 57 et 71.

4. Un catalyseur selon l'une quelconque des revendications précédentes, caractérisé en ce que la terre rare est le lanthane.

5. Un catalyseur selon l'une quelconque des revendications précédentes, caractérisé en ce que la zéolite à larges pores est la zéolite Y.

6. Un catalyseur selon l'une quelconque des revendications précédentes, caractérisé en ce qu'il s'agit d'un catalyseur FCC.

7. Un catalyseur selon l'une quelconque des revendications précédentes, caractérisé en ce que le matériau de revêtement est préparé par neutralisation d'une solution d'un métal de terres rares et d'aluminium dans de l'acide phosphorique par une solution d'une base.

8. Un catalyseur selon la revendication 7, caractérisé en ce que la base est organique.

9. Un catalyseur selon l'une quelconque des revendications précédentes, caractérisé en ce que ce revêtement est appliqué à ces particules par pulvérisation.

10. Un catalyseur selon l'une quelconque des revendications précédentes, caractérisé en ce que le matériau de revêtement a une surface spécifique de 50 à 500 m$^2$/g et un volume de pores de 0,3 à 1,5 cm3/g.

11. Un procédé de craquage d'une charge d'hydrocarbures lourds contenant au moins un métal choisi parmi vanadium et nickel, consistant à mettre la charge, dans des conditions de craquage catalytique, au contact d'un catalyseur sous la forme de particules discrètes comprenant une zéolite à larges pores dans une matrice d'oxyde minéral, caractérisé en ce que ces particules supportent un revêtement poreux de passivation comprenant oxyde de terres rares/oxyde d'aluminium/phosphate d'aluminium.

12. Un procédé selon la revendication 11, caractérisé en ce que le revêtement superficiel piège les composants de la charge contenant les éléments vanadium, cuivre, nickel, fer et/ou sodium.

13. Un procédé selon les revendications 11 ou 12, caractérisé en ce que le revêtement comprend oxyde de terres rares, oxyde d'aluminium et phosphate d'aluminium dans un rapport de 10/20/70 ou 90/5/5.

14. Un procédé selon l'une quelconque des revendications 11 à 13, caractérisé en ce que le craquage catalytique est un craquage catalytique en lit fluidisé ou un craquage catalytique en lit mobile.

15. Un procédé selon l'une quelconque des revendications 11 à 14, caractérisé en ce que le point initial d'ébullition de la charge est au moins égal à 205°C, son point moyen au moins égal à 260°C et son point final au moins égal à 315°C.

# FIGURE 1

## CATALYST TYPES FOR SCAVENGING METALS

FCC CATALYST

SCAVENGER

FCC CATALYST
CONTAINING SCAVENGER(S)

SCAVENGER COATED
FCC CATALYST

EP 0 323 735 B1

## FIGURE 2

**LAAP COATING OF COMMERCIAL FCC CATALYST**

Example 1

Commercial FCC
Catalyst

Example 6

LAAP Coated
Commercial FCC
Catalyst

FIGURE 3

MAAP COATING OF BASE FCC CATALYST

Example 2

Lab Prepared
Base FCC Catalyst

Example 8

MAAP Coated
FCC Catalyst

FIGURE 4

SnO$_2$ COATING OF BASE FCC CATALYST

Example 2

Lab Prepare
Base FCC
Catalyst

Example 9

SnO$_2$ Coated
FCC Catalyst